# FASCICULE DE BREVET EUROPEEN

(11) **EP 3 673 169 B1**
(45) Date de publication et mention de la délivrance du brevet: **13.07.2022**
(21) Numéro de dépôt: 18780173.3
(22) Date de dépôt: 21.08.2018
(51) Int. Cl.: F02K 9/56, F02K 9/60, F02K 9/50, F16L 55/05

(54) **SYSTEME D'ALIMENTATION AMELIORE POUR L'ALIMENTATION DE MOTEUR-FUSEE**
VERBESSERTES VERSORGUNGSSYSTEM ZUR VERSORGUNG EINES RAKETENMOTORS
IMPROVED SUPPLY SYSTEM FOR SUPPLYING A ROCKET ENGINE

(30) Priorité: 24.08.2017 FR 1757849
(43) Date de publication de la demande: 01.07.2020
(73) Titulaire: ArianeGroup SAS, 78130 Les Mureaux (FR)
(72) Inventeur: CINGAL, Benoît, Mathieu, André, 27207 Vernon Cedex (FR); BECRET, Philippe, 27207 Vernon Cedex (FR); TRIGER, Mathieu, Henry, Raymond, 27207 Vernon Cedex (FR)
(74) Mandataire: Cabinet Beau de Loménie
(86) Numéro de dépôt international: PCT/FR2018/052085
(87) Numéro de publication internationale: WO 2019/038501

(56) Documents cités:
- FR-A1- 2 975 441
- US-A- 3 286 882
- US-B1- 7 784 269

## Description

### DOMAINE DE L'INVENTION

La présente invention concerne un système d'alimentation amélioré pour l'alimentation d'un moteur-fusée en au moins un ergol.

### ETAT DE LA TECHNIQUE ANTERIEURE

Dans le domaine des fusées à propulsion liquide, on a donné le nom d'effet POGO à l'entrée en résonance d'un ergol (modes hydrauliques) dans le circuit d'alimentation du moteur-fusée avec des oscillations mécaniques de la fusée. Comme la poussée du moteur-fusée varie avec le débit d'ergol fourni par le circuit d'alimentation, et que le débit d'ergol fluctue avec les fluctuations de poussée moteur, une telle entrée en résonance peut causer des oscillations rapidement divergentes, et donc donner lieu à des difficultés de guidage, et même à des dommages pouvant aller jusqu'à la perte totale de la charge utile, voire du véhicule. Depuis le début du développement des fusées à propulsion liquide, il s'est donc révélé très important de prendre toutes les mesures possibles pour limiter ou éviter l'apparition de cet effet POGO.

L'atténuation de ce phénomène est classiquement réalisé par la présence d'un système correcteur de type capacitif (SCP) dans le circuit d'alimentation, permettant de réduire les fluctuations de débit dans ce circuit et de modifier la fréquence hydraulique de l'ensemble. Un exemple de ce système, décrit dans le brevet WO2012156615 A2, fait intervenir une bulle de gaz (par exemple de l'hélium) piégée dans une cavité en communication avec le circuit d'alimentation via des orifices. La compressibilité de cette bulle d'hélium permet d'amortir les fluctuations de débit dans le circuit d'alimentation. Le volume de la bulle de gaz est régulé de manière à limiter l'impact des variations de pression dans la ligne d'alimentation sur les performances du système. Cette régulation fait appel à un dispositif d'injection permanente d'hélium dans la cavité et à un système de prélèvement par aspiration et rejet dans le circuit d'alimentation.

Néanmoins, ces dispositifs présentent différents inconvénients. L'hélium injecté dans le système est rejeté dans le circuit d'alimentation, et ingéré ensuite par la turbopompe, ce qui peut provoquer des instabilités dynamiques. Par ailleurs, l'hélium présente un coût élevé, intrinséquement mais également une masse et un volume d'emport non négligeables. En outre, le volume de la bulle ne peut être régulé que sur une valeur unique, à moins de faire appel à des dispositifs mécaniquement complexes tels que ceux décrits dans le brevet FR2975440. Or, les fréquences propres de la structure de la fusée (modes de structure) varient au cours du vol, au fur et à mesure de la vidange des réservoirs, de sorte qu'il existe un risque que ces modes entrent en résonance avec les oscillations hydrauliques (modes hydrauliques), malgré la présence de cette bulle. US 7 784 269 B1 et FR 2 975 441 A1 décrivent d'autres exemples de systèmes d'alimentation de moteurs en ergol.

Il existe donc un besoin pour un dispositif permettant de pallier au moins en partie les inconvénients ci-dessus.

### PRESENTATION DE L'INVENTION

Le présent exposé concerne un système d'alimentation pour l'alimentation d'un moteur-fusée en au moins un ergol selon la revendication 1, le système d'alimentation comprenant au moins un circuit d'alimentation apte à faire circuler l'ergol, et au moins un réservoir en communication fluidique avec le circuit d'alimentation par l'intermédiaire d'au moins une canalisation de communication, de sorte qu'un fluide contenu dans le réservoir peut s'écouler de ce dernier jusqu'au circuit d'alimentation, et inversement, via ladite au moins une canalisation de communication, le réservoir étant apte à contenir un volume de gaz, et des moyens de chauffage aptes à faire varier le volume de gaz dans le réservoir, les moyens de chauffage étant configurés pour vaporiser l'ergol dans le réservoir.

Dans le présent exposé, par « au moins un ergol », on comprend qu'un ou plusieurs ergols ou propergols, peuvent s'écouler dans le circuit d'alimentation à l'état liquide.

Le réservoir est en communication fluidique avec le circuit d'alimentation, de sorte qu'un fluide contenu dans le réservoir peut s'écouler de ce dernier jusqu'au circuit d'alimentation, et inversement. Plus précisément, le fluide peut aller et venir entre le réservoir et le circuit d'alimentation, permettant aux oscillations hydrauliques existant dans le circuit d'alimentation d'être transmises au réservoir. On comprend ainsi que ce réservoir est un réservoir rapporté au circuit d'alimentation, la communication fluidique entre ce dernier et le réservoir s'effectuant sur une portion intermédiaire de la ligne d'alimentation, entre le réservoir principal du moteur-fusée contenant l'ergol destiné à alimenter la chambre de combustion, et la chambre de combustion. Le fluide présent dans le réservoir peut être l'ergol à l'état liquide circulant dans le circuit d'alimentation, ainsi qu'une bulle de gaz formée essentiellement, sinon exclusivement par l'ergol à l'état gazeux, présente dans la partie supérieure de ce réservoir.

Le système d'alimentation comprend en outre des moyens de chauffage. Par « aptes à faire varier le volume de gaz dans le réservoir », on comprend que ces moyens de chauffage sont par exemple aptes à être régulés de sorte à élever la température au sein du réservoir, à provoquer ainsi l'évaporation de l'ergol liquide présent dans le réservoir, et donc à augmenter le volume de la bulle de gaz également présente dans ce réservoir. Ainsi, en jouant sur le volume de cette bulle, il est possible de modifier la fréquence hydraulique dans le circuit d'alimentation, de manière à faire en sorte que cette fréquence hydraulique ne coïncide pas avec la fréquence des oscillations mécaniques de la fusée, même si celle-ci varie en cours de vol, évitant ainsi l'entrée en résonance de l'ensemble. Ce dispositif permet donc de préserver l'intégrité mécanique de la fusée, et de s'affranchir de l'utilisation d'hélium ou toute autre injection de gaz pour la formation et la régulation du volume de cette bulle. Le risque de générer des instabilités dynamiques, provoquées par le rejet de ce gaz jusqu'à la turbopompe, est ainsi limité, du fait qu'au moins une partie du gaz se recondense une fois dans la ligne d'alimentation. Par ailleurs, ce dispositif permet de réduire les coûts par rapport aux configurations à volume variable telles que celles décrites dans le brevet FR2975440.

Dans certains modes de réalisations, le réservoir et les moyens de chauffage sont séparés au moins partiellement du circuit d'alimentation par une zone thermiquement conductrice.

Le réservoir et le circuit d'alimentation peuvent par exemple être séparés par une paroi ou un pont métallique. Cela permet de pouvoir maîtriser la conduction entre le réservoir et le circuit d'alimentation. Ainsi, il est possible de faire varier le volume de la bulle de gaz en un temps limité, de l'ordre de dix secondes par exemple, lorsque cela s'avère nécessaire.

Dans certains modes de réalisation, le réservoir et les moyens de chauffage sont séparés au moins partiellement du circuit d'alimentation par une zone thermiquement isolante.

Cette zone thermiquement isolante peut comprendre tout type de matériau thermiquement isolant disposé entre le réservoir et le circuit d'alimentation, ou encore comprendre une zone dans laquelle le réservoir et le circuit d'alimentation sont séparés par un espace. Cette zone thermiquement isolante permet de limiter les pertes thermiques du réservoir, en limitant l'influence thermique du circuit d'alimentation sur le réservoir. La précision des moyens de chauffage est ainsi accrue et la puissance thermique nécessaire réduite, l'impact de la température du circuit d'alimentation étant minimisé.

Dans certains modes de réalisation, le réservoir communique avec le circuit d'alimentation par l'intermédiaire d'au moins deux canalisations de communication.

Ces au moins deux canalisations permettent de mettre le réservoir et le circuit d'alimentation en communication fluidique.

Dans certains modes de réalisation, le circuit d'alimentation comprend une conduite ayant une direction axiale, et le réservoir est disposé radialement autour du circuit d'alimentation, par rapport à la direction axiale.

Par exemple, dans certains modes de réalisation, le réservoir a une cavité, la cavité étant déportée radialement par rapport à la direction axiale, sur un côté du circuit d'alimentation.

Cette disposition permet d'optimiser l'isolation thermique entre le réservoir et le circuit d'alimentation, en limitant la proportion de surfaces du réservoir et du circuit d'alimentation en vis-à-vis respectivement les uns des autres.

Selon un autre exemple, dans certains modes de réalisation, le réservoir est annulaire et est disposé radialement autour du circuit d'alimentation par rapport à la direction axiale.

Cette disposition permet d'obtenir un ensemble plus compact, et ainsi d'optimiser la rigidité du système d'alimentation. Elle permet également un écoulement plus homogène dans le circuit d'alimentation en raison de la symétrie de révolution.

Dans certains modes de réalisation, les moyens de chauffage comprennent au moins un élément de chauffage sur une face du réservoir.

Dans certains modes de réalisation, les moyens de chauffage comprennent au moins deux éléments de chauffage sur une face du réservoir, les au moins deux éléments de chauffage étant répartis le long de ladite face.

Le ou les éléments de chauffage peuvent par exemple être en contact avec la face externe du réservoir. Par conséquent, le chauffage de la cavité du réservoir s'effectue par conduction à travers la paroi du réservoir. La régulation du volume de la bulle de gaz dans la cavité peut donc être réalisée par simple transfert thermique, sans nécessiter l'ajout d'un gaz dans la cavité.

Dans certains modes de réalisation, le ou les éléments de chauffage sont des résistances électriques.

Lorsqu'elles sont parcourues par un courant électrique, ces résistances électriques dégagent de la chaleur transférée par conduction à travers la paroi du réservoir. La régulation du volume de gaz dans la cavité de ce dispositif peut donc être effectuée par un dispositif simple et peu coûteux.

Dans certains modes de réalisation, le ou les éléments de chauffage sont des circuits chacun configurés pour faire circuler un fluide chaud.

Par « chaud », on comprend une température supérieure à la température de vaporisation de l'ergol. Ces circuits peuvent par exemple être des conduites enroulées autour du réservoir, dans lesquelles circule un fluide chaud. Le fluide chaud peut par exemple être prélevé à différents endroits du moteur-fusée. L'apport d'un ou plusieurs fluides supplémentaires n'est donc pas nécessaire, ce qui offre une solution économique. Dans ce cas également, les transferts de chaleur se font également par conduction à travers la paroi du réservoir.

Dans certains modes de réalisation, les circuits sont disposés à l'intérieur de la paroi du réservoir.

Les circuits sont ainsi réalisés en même temps que la paroi du réservoir lors de la fabrication de celle-ci, par fabrication additive par exemple. Cela permet de minimiser les coûts de fabrication globaux du système d'alimentation. Par ailleurs, le fait que les circuits soient disposés dans la paroi du réservoir permet d'optimiser les transferts de chaleur depuis ces circuits jusqu'à la cavité du dispositif.

Dans certains modes de réalisation, le système d'alimentation comporte une unité de commande électronique.

Dans certains modes de réalisation, l'unité de commande électronique est configurée pour activer les éléments de chauffage indépendamment les uns des autres.

Dans certains modes de réalisation, l'unité de commande électronique est configurée pour moduler la puissance envoyée sur chacun des éléments de chauffage indépendamment les uns des autres.

L'unité de commande électronique peut être une unité du type ECU (de l'anglais Electronic Control Unit). Cette unité permet par exemple, par une commande d'un utilisateur ou de manière automatique, d'activer ou de désactiver indépendamment l'un et/ou l'autre des éléments de chauffage. Cela permet de commander l'activation de ces éléments de chauffage en fonction du volume de gaz souhaité dans la cavité du réservoir. Il est ainsi possible de réguler facilement le volume de la bulle de gaz dans cette cavité, et ainsi de ne pas être limité à un volume unique, contrairement aux solutions existantes.

Dans certains modes de réalisation, le système d'alimentation comporte un dispositif de mesure de niveau permettant de déterminer le niveau d'une interface liquide/gaz au sein du réservoir, le dispositif de mesure de niveau étant connectée à l'unité de commande électronique.

Le dispositif de mesure de niveau peut comporter par exemple une pluralité de capteurs de température, permettant d'estimer indirectement le niveau de l'interface liquide/gaz.

Dans certains modes de réalisation,le dispositif de mesure de niveau est une sonde de niveau.

La sonde de niveau permet de connaître directement et facilement le niveau de l'interface liquide/gaz dans la cavité, et donc le volume de la bulle de gaz dans cette cavité.

Dans certains modes de réalisation, l'unité de commande électronique est configurée pour, en fonction du niveau de l'interface liquide/gaz au sein du réservoir déterminé par le dispositif de mesure de niveau, activer l'un et/ou l'autre des éléments de chauffage, et/ou désactiver l'un et/ou l'autre des éléments de chauffage.

La sonde de niveau permet de communiquer à l'unité de commande électronique le niveau de l'interface liquide/gaz dans la cavité du dispositif idéalement en temps réel. En fonction d'un volume de gaz souhaité, l'unité de commande électronique peut donc commander d'elle-même l'activation ou la désactivation d'un ou plusieurs éléments de chauffage sur la base de l'information communiquée par la sonde de niveau, sans intervention extérieure d'un utilisateur. Par conséquent, le volume de gaz peut être régulé en boucle fermée, de manière autonome.

Dans certains modes de réalisation, l'unité de commande électronique est configurée pour programmer temporellement la modulation de la puissance envoyée sur chacun des éléments de chauffage.

Il est ainsi possible de régler l'ECU, et donc la puissance alimentant les éléments de chauffage à l'avance, en fonction du profil de la mission et des conditions de vol envisagées. Cela permet de s'affranchir de la nécessité de capteurs ou sonde de niveau, et ainsi de simplifer le dispositif.

Dans certains modes de réalisation, le réservoir comporte une double paroi présentant une paroi externe et une paroi interne de plus forte conductivité que la paroi externe.

Par conséquent, les transferts thermiques entre les éléments de chauffage et l'ergol peuvent être améliorés, tout en minimisant les transferts thermiques entre la paroi externe du réservoir et le circuit d'alimentation. Le volume de la bulle de gaz dans la cavité peut ainsi être régulé avec plus de précision et de manière plus économique.

### BREVE DESCRIPTION DES DESSINS

L'invention et ses avantages seront mieux compris à la lecture de la description détaillée faite ci-après de différents modes de réalisation de l'invention donnés à titre d'exemples non limitatifs. Cette description fait référence aux pages de figures annexées, sur lesquelles :
- la figure 1 représente un schéma de principe d'un système d'alimentation ;
- la figure 2 est une vue en perspective d'un premier mode de réalisation ;
- les figures 3A et 3B représentent une coupe transversale d'un premier exemple de système d'alimentation du premier mode de réalisation, dans deux états de fonctionnement ;
- la figure 4 représente une coupe transversale d'un deuxième exemple de système d'alimentation du premier mode de réalisation ;
- la figure 5 est une vue en perspective d'un deuxième mode de réalisation.

### DESCRIPTION DETAILLEE D'EXEMPLES DE REALISATION

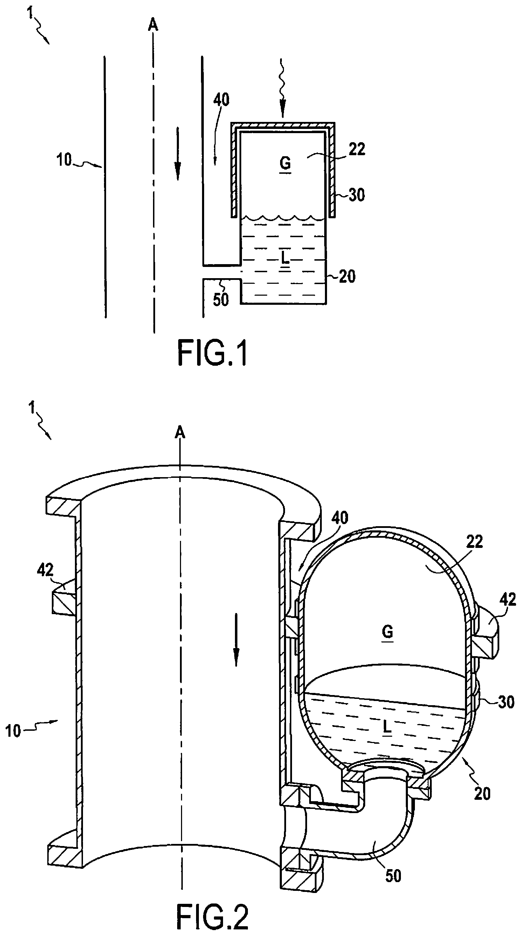

La figure 1 montre un schéma de principe d'un système d'alimentation 1 pour l'alimentation d'un moteur-fusée en au moins un ergol. Le système d'alimentation 1 comporte un circuit d'alimentation 10 s'étendant suivant une direction axiale A, dans lequel circule l'ergol L à l'état liquide suivant le sens d'écoulement indiqué par la flèche, entre un réservoir principal (non représenté) dans lequel l'ergol destiné à alimenter le moteur est stocké, et la chambre de combustion (non représentée). Le système d'alimentation 1 comporte également un réservoir 20, comportant une cavité 22. Le réservoir 20 est en communication fluidique avec le circuit d'alimentation 10, par l'intermédiaire d'au moins une canalisation de communication 50.

La cavité 22 contient, dans sa partie inférieure, un certain volume d'ergol liquide L communiquant avec l'ergol liquide circulant dans le circuit d'alimentation 10 par l'intermédiaire de la canalisation 50, et dans sa partie supérieure, une bulle de gaz G, correspondant à l'ergol à l'état vapeur. Les oscillations hydrauliques existant dans le circuit d'alimentation 10 peuvent ainsi être transmises au réservoir 20 via la canalisation 50, et être amorties par la présence de la bulle de gaz G.

Le système d'alimentation 1 comporte également des éléments de chauffage 30, ici disposés sur une face externe de la paroi du réservoir 20. Les éléments de chauffage 30 sont configurés pour apporter de la chaleur sur la face externe du réservoir 20. Cette chaleur est alors transférée par conduction à travers la paroi du réservoir 20, jusqu'à la cavité 22, augmentant par conséquent la température dans celle-ci. Cette augmentation de la température provoque l'évaporation de l'ergol liquide L, et donc l'augmentation du volume de la bulle de gaz G dans la cavité 22.

Par ailleurs, hormis la présence de la canalisation de communication 50, par laquelle le circuit d'alimentation 10 et le réservoir 20 sont en communication fluidique, le circuit d'alimentation 10 et le réservoir 20 sont isolés l'un de l'autre par une zone thermiquement isolante 40. Cette zone thermiquement isolante 40 permet de réguler précisément les éléments de chauffage 30 à la température souhaitée, en minimisant l'impact de la température du circuit d'alimentation 10, mais également de minimiser l'impact de la température du réservoir 20 sur le circuit d'alimentation 10.

De manière alternative, le circuit d'alimentation 10 et le réservoir 20 peuvent être séparés l'un de l'autre par une zone thermiquement conductrice. Il peut être ainsi possible de maîtriser l'impact de la température du circuit d'alimentation 10. Cela permet, lorsque cela s'avère nécessaire, de refroidir rapidement le réservoir 20, et ainsi de diminuer rapidement le volume de la bulle de gaz G, en tirant profit de la température du circuit d'alimentation 10.

La figure 2 représente une vue en perspective, illustrant une coupe dans un plan de coupe parallèle à l'axe A du système d'alimentation 1, d'un premier mode de réalisation de l'invention. Le circuit d'alimentation 10 présente une structure sensiblement cylindrique autour de l'axe A. Selon ce mode de réalisation, le réservoir 20 présente une forme oblongue, comportant un tronc sensiblement cylindrique, et est déporté radialement par rapport au circuit d'alimentation 10.

Le réservoir 20 ne communique avec le circuit d'alimentation 10 que par l'intermédiaire de la canalisation de communication 50. Le réservoir 20 est disposé de sorte que l'axe de révolution de celui-ci soit parallèle à la direction axiale A, de sorte que la bulle de gaz G se trouve naturellement piégée dans la partie du réservoir 20 opposée à la canalisation de communication 50.

Afin d'améliorer la tenue mécanique du système, au moins un ensemble de raidisseurs 42 peut être prévu autour du réservoir 20, sur la face externe de celui-ci, et sur la face externe du circuit d'alimentation 10. Le fait que les raidisseurs 42 autour du réservoir 20 et du circuit d'alimentation 10 soient formés ensemble d'un seul tenant confère au réservoir 20 un deuxième point de liaison, en plus de la canalisation 50, avec le circuit d'alimentation 10. Cela permet d'améliorer la tenue mécanique de l'ensemble. De plus, les raidisseurs 42 peuvent être formés d'un matériau thermiquement isolant, de manière à ne pas créer de pont thermique entre le circuit d'alimentation 10 et le réservoir 20. Ainsi, le circuit d'alimentation 10 et le réservoir 20 sont isolés l'un de l'autre par une zone thermiquement isolante 40 pouvant comprendre ces raidisseurs 42, et un espace séparant le réservoir 20 et le circuit d'alimentation 10, ledit espace pouvant comporter du gaz ou être tiré au vide. De manière alternative, lorsque le circuit d'alimentation 10 et le réservoir 20 sont séparés l'un de l'autre par une zone thermiquement conductrice, les raidisseurs 42 peuvent être formés d'un matériau thermiquement conducteur.

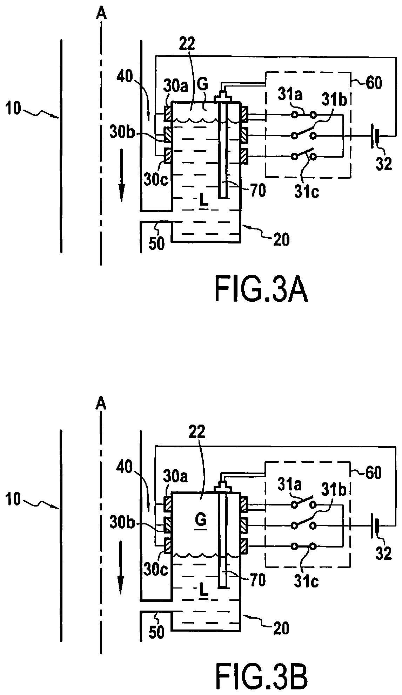

Les figures 3A et 3B représentent une section transversale d'un premier exemple de système d'alimentation du premier mode de réalisation. Dans cet exemple, les éléments de chauffage 30 sont des résistances électriques. Plus précisément, une première résistance électrique 30a est disposée autour du réservoir sur une partie supérieure de celui-ci, ici contre sa paroi externe. Une deuxième résistance électrique 30b est disposée sous la première résistance électrique 30a, suivant la direction verticale, et une troisième résistance électrique 30c est disposée sous la deuxième résistance électrique 30b. La première résistance électrique 30a est connectée à un premier commutateur 31a, la deuxième résistance électrique 30b est connectée à un deuxième commutateur 31b, et la troisième résistance électrique 30c est connectée à un troisième commutateur 31c. Chaque commutateur 31a, 31b et 31c permet d'activer et de désactiver chaque résistance 30a, 30b, 30c respectivement, indépendamment les unes des autres. Les commutateurs peuvent être par exemple des interrupteurs. Pour ce faire, une unité de commande électronique 60, comprenant les commutateurs, commande l'ouverture et la fermeture de ces derniers. Dans l'exemple de la figure 3A, l'unité de commande électronique 60 commande la fermeture du commutateur 31a, de sorte à mettre en communication la première résistance électrique 30a avec une source d'énergie telle qu'une batterie 32. Cette dernière peut alors alimenter électriquement la première résistance électrique 30a, celle-ci chauffant ainsi la paroi du réservoir 20. Dans ce même exemple, les commutateurs 31b et 31c sont en position ouverte, de sorte que la batterie 32 n'alimente pas les deuxième et troisième résistances 30b et 30c.

Par ailleurs, une sonde de niveau 70 peut être prévue dans la cavité 22, et connectée à l'unité de commande électronique 60. Cette sonde de niveau 70 permet de déterminer la position de l'interface entre la phase liquide L et la phase gazeuse G de l'ergol présent dans la cavité 22, et donc le volume de la bulle de gaz. Par conséquent, en fonction d'un volume de la bulle de gaz souhaité, correspondant à un régime de fonctionnement du moteur-fusée, et sur la base de l'information reçue par la sonde de niveau 70, l'unité de commande électronique 60 peut commander l'activation d'une ou plusieurs résistances afin de déplacer l'interface liquide/gaz à la hauteur souhaitée, et ainsi d'atteindre le volume de bulle de gaz souhaité.

Dans cet exemple, sur la figure 3A, seule la première résistance électrique 30a est activée, de sorte que l'interface liquide/gaz dans la cavité 22 se trouve au niveau de cette résistance. Pour passer de l'état de la figure 3A à celui de la figure 3B, afin d'abaisser le niveau de l'interface liquide/gaz, et donc d'augmenter le volume de la bulle de gaz, l'unité de commande 60 commande l'ouverture du premier commutateur 31a de manière à désactiver la première résistance électrique 30a. Dans le même temps, l'unité de commande 60 commande l'activation de la troisième résistance électrique 30c, disposée sur la partie la plus basse du réservoir 20 par rapport aux autres résistances électriques, en fermant le troisième commutateur 31c. L'interface liquide/gaz est ainsi abaissée au niveau de cette troisième résistance électrique 30c. Il est également possible de commander, préalablement à l'activation de la troisième résistance électrique 30c, l'activation de la deuxième résistance électrique 30b. Cela permet de piloter efficacement et précisément l'évolution du volume de la bulle de gaz.

Bien que l'exemple des figures 3A et 3B comporte trois résistances, davantage de résistances sont possibles. Ainsi, plus généralement, l'interface liquide/gaz peut être abaissée sensiblement au niveau de la résistance la plus basse activée.

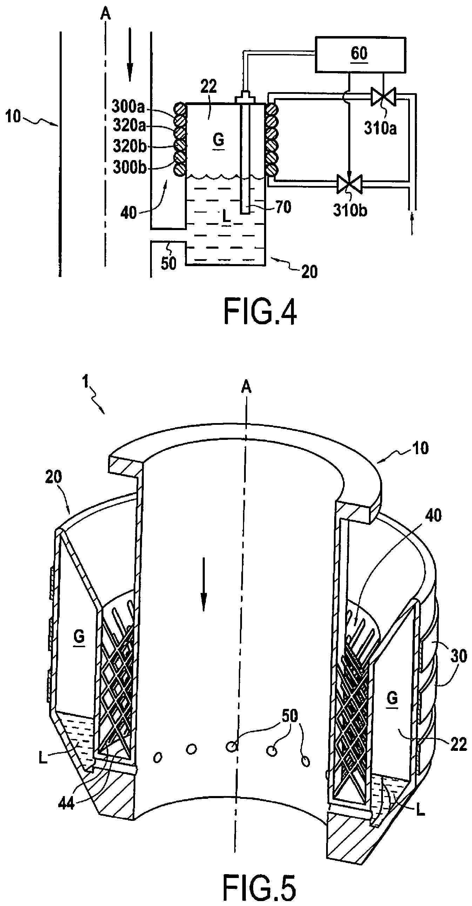

La figure 4 représente une coupe transversale d'un deuxième exemple de système d'alimentation du premier mode de réalisation. Dans cet exemple, les éléments de chauffage 30 sont des circuits dans lesquels circule un fluide chaud. Les échanges de chaleur se font donc par transferts convectifs et conductifs entre ces circuits et la cavité 22. Plus précisément, un premier circuit 300a est disposé autour du réservoir sur une partie supérieure de celui-ci, ici contre sa paroi externe. Un deuxième circuit 300b est disposé sous le premier circuit 300a, suivant la direction verticale. Le premier circuit 300a est connecté à une première vanne 310a et à une sortie de fluide 320a, et le deuxième circuit 300b est connecté à une deuxième vanne 310b et à une sortie de fluide 320b. Chaque vanne 310a et 310b permet d'alimenter respectivement les circuits 300a et 300b indépendamment l'un de l'autre, en fonction du volume de la bulle de gaz souhaité, et de l'information reçue par la sonde de niveau 70. Pour ce faire, les vannes sont connectés à l'unité de commande électronique 60, commandant l'ouverture et la fermeture de ces vannes. L'unité de commande électronique peut également réguler les débits d'écoulement du fluide chaud dans l'un ou l'autre des circuits 300a et 300b, selon le degré d'ouverture des vannes 310a et 310b. Le fluide chaud peut être des gaz chauds prélevés dans le moteur-fusée, un autre ergol ayant une température de saturation, relativement aux pressions considérées, plus élevée que l'ergol s'écoulant dans le circuit d'alimentation 10, ou tout autre fluide permettant le réchauffement de la paroi du réservoir 20 et l'évaporation de l'ergol liquide dans la cavité 22. Dans l'exemple présenté sur la figure 4, les circuits 300a et 300b sont des tubes enroulés autour du réservoir 20, contre la paroi externe de celui-ci. Néanmoins, ces tubes peuvent également être disposés à l'intérieur de la paroi du réservoir 20. De plus, bien que l'exemple de la figure 4 comporte deux circuits, davantage de circuits sont possibles. Par ailleurs, bien que sur l'exemple de la figure 4, un même fluide chaud permet d'alimenter sélectivement l'un ou l'autre des circuits, chacun de ces circuits peut également être alimenté par un fluide chaud différent.

La figure 5 représente une vue en perspective, illustrant une section dans un plan de coupe parallèle à l'axe A du système d'alimentation 1, d'un deuxième mode de réalisation. Le circuit d'alimentation 10 présente une structure sensiblement cylindrique autour de l'axe A. Selon ce mode de réalisation, le réservoir 20 présente une forme annulaire, et est disposé radialement autour du circuit d'alimentation 10. Le réservoir 20 communique avec le circuit d'alimentation 10 par l'intermédiaire d'une pluralité de canalisations de communication 50, connectées à une partie inférieure du réservoir 20.

Le circuit d'alimentation 10 et le réservoir 20 sont isolés l'un de l'autre par une zone thermiquement isolante 40. Dans ce mode de réalisation, cette zone thermiquement isolante 40 comporte, outre un espace pouvant comporter du gaz, du vide, ou un matériau isolant non structural (par exemple de la mousse) entre le réservoir 20 et le circuit d'alimentation 10, une structure maillée 44, par exemple en nid d'abeille, reliant mécaniquement le circuit d'alimentation 10 et le réservoir 20. Cette structure maillée 44 présente une faible conductivité thermique. Cette structure maillée 44 permet d'améliorer la rigidité du système d'alimentation 1, tout en maîtrisant les pertes thermiques dans la cavité 22.

Dans l'exemple de la figure 5, les éléments de chauffage 30 sont des résistances électriques disposées autour du réservoir 20 et sur toute sa circonférence. Cependant, des circuits tels que ceux décrits en référence à la figure 4 peuvent également être utilisés comme éléments de chauffage 30 dans ce mode de réalisation. Par ailleurs, le mode de fonctionnement du système d'alimentation 1, permettant de réguler le volume de la bulle de gaz G dans la cavité 22, est le même que pour le premier mode de réalisation, et ne sera donc pas répété ici.

Bien que la présente invention ait été décrite en se référant à des exemples de réalisation spécifiques, il est évident que des modifications et des changements peuvent être effectués sur ces exemples sans sortir de la portée générale de l'invention telle que définie par les revendications. De plus, bien que des éléments de chauffage utilisant des éléments conductifs (résistances électriques) ou des échangeurs convectifs aient été présentés, d'autres solutions conductives et convectives sont envisageables, ainsi que des éléments de chauffage fonctionnant par échanges radiatifs ou inductifs. Par conséquent, la description et les dessins doivent être considérés dans un sens illustratif plutôt que restrictif.

## Revendications

1. Système d'alimentation (1) pour l'alimentation d'un moteur-fusée en au moins un ergol, le système d'alimentation (1) comprenant au moins un circuit d'alimentation (10) apte à faire circuler l'ergol, et au moins un réservoir (20) en communication fluidique avec le circuit d'alimentation (10) par l'intermédiaire d'au moins une canalisation de communication (50), de sorte qu'un fluide contenu dans le réservoir (20) peut s'écouler de ce dernier jusqu'au circuit d'alimentation (10), et inversement, via ladite au moins une canalisation de communication (50), le réservoir (20) étant apte à contenir un volume de gaz (G), le système d'alimentation (1) étant **caractérisé en ce qu'**il comprend des moyens de chauffage aptes à faire varier le volume de gaz dans le réservoir (20), les moyens de chauffage étant configurés pour vaporiser l'ergol dans le réservoir (20).

2. Système d'alimentation (1) selon la revendication 1, dans lequel le réservoir (20) et les moyens de chauffage sont séparés au moins partiellement du circuit d'alimentation (10) par une zone thermiquement isolante (40).

3. Système d'alimentation (1) selon la revendication 1 ou 2, dans lequel le circuit d'alimentation (10) comprend une conduite ayant une direction axiale (A), et le réservoir (20) est disposé radialement autour du circuit d'alimentation (10), par rapport à la direction axiale (A).

4. Système d'alimentation (1) selon la revendication 3, dans lequel le réservoir (20) a une cavité (22), la cavité (22) étant déportée radialement par rapport à la direction axiale (A), sur un côté du circuit d'alimentation (10).

5. Système d'alimentation (1) selon la revendication 3, dans lequel le réservoir (20) est annulaire et est disposé radialement autour du circuit d'alimentation (10) par rapport à la direction axiale (A).

6. Système d'alimentation (1) selon l'une quelconque des revendications précédentes, dans lequel les moyens de chauffage comprennent au moins deux éléments de chauffage (30) sur une face du réservoir (20), les au moins deux éléments de chauffage (30) étant répartis le long de ladite face.

7. Système d'alimentation (1) selon la revendication 6, dans lequel les au moins deux éléments de chauffage (30) sont des résistances électriques.

8. Système d'alimentation (1) selon la revendication 6, dans lequel les au moins deux éléments de chauffage (30) sont des circuits chacun configuré pour faire circuler un fluide chaud.

9. Système d'alimentation (1) selon la revendication 8, dans lequel les circuits sont disposés à l'intérieur de la paroi du réservoir (20).

10. Système d'alimentation (1) selon l'une quelconque des revendications 6 à 9, comportant une unité de commande électronique (60) configurée pour activer les éléments de chauffage (30) indépendamment les uns des autres.

11. Système d'alimentation (1) selon la revendication 10, comportant un dispositif de mesure de niveau (70) permettant de déterminer le niveau d'une interface liquide/gaz au sein du réservoir (20), dispositif de mesure de niveau (70) étant connectée à l'unité de commande électronique (60).

12. Système d'alimentation (1) selon la revendication 10 ou 11, dans lequel l'unité de commande électronique (60) est configurée pour, en fonction du niveau de l'interface liquide/gaz au sein du réservoir (20) déterminé par le dispositif de mesure de niveau (70), activer l'un et/ou l'autre des éléments de chauffage (30).

13. Système d'alimentation (1) selon l'une quelconque des revendications précédentes, dans lequel le réservoir (20) comporte une double paroi présentant une paroi externe et une paroi interne de plus forte conductivité que la paroi externe.

## Patentansprüche

1. Versorgungssystem (1) für die Versorgung eines Raketenmotors mit zumindest einem Treibstoff, wobei das Versorgungssystem (1) zumindest einen Versorgungskreis (10), der dazu geeignet ist, den Treibstoff zirkulieren zu lassen, und zumindest ein Reservoir (20) in Fluidkommunikation mit dem Versorgungskreis (10) mittels zumindest eines Kommunikationskanals (50) umfasst, auf solche Weise, dass ein in dem Reservoir (20) enthaltenes Fluid von diesem letzteren bis zu dem Versorgungskreis (10) und zurück über den zumindest einen Kommunikationskanal (50) strömen kann, wobei das Reservoir (20) dazu geeignet ist, ein Gasvolumen (G) zu enthalten, wobei das Versorgungssystem (1) **dadurch gekennzeichnet ist, dass** es Heizmittel umfasst, die dazu geeignet sind, das Gasvolumen in dem Reservoir (20) variieren zu lassen, wobei die Heizmittel dazu ausgestaltet sind, den Treibstoff in dem Reservoir (20) zu verdampfen.

2. Versorgungssystem (1) nach Anspruch 1, wobei das Reservoir (20) und die Heizmittel zumindest zum Teil durch eine thermisch isolierende Zone (40) von dem Versorgungskreis (10) getrennt sind.

3. Versorgungssystem (1) nach Anspruch 1 oder 2, wobei der Versorgungskreis (10) eine Leitung umfasst, die eine axiale Richtung (A) aufweist, und das Reservoir (20) in Bezug auf die axiale Richtung (A) radial um den Versorgungskreis (10) herum angeordnet ist.

4. Versorgungssystem (1) nach Anspruch 3, wobei das Reservoir (20) einen Hohlraum (22) aufweist, wobei der Hohlraum (22) auf einer Seite des Versorgungskreises (10) in Bezug auf die axiale Richtung (A) radial versetzt ist.

5. Versorgungssystem (1) nach Anspruch 3, wobei das Reservoir (20) ringförmig ist und in Bezug auf die axiale Richtung (A) radial um den Versorgungskreis (10) herum angeordnet ist.

6. Versorgungssystem (1) nach einem der vorhergehenden Ansprüche, wobei die Heizmittel zumindest zwei Heizelemente (30) an einer Außenseite des Reservoirs (20) umfassen, wobei die zumindest zwei Heizelemente (30) entlang der Außenseite verteilt sind.

7. Versorgungssystem (1) nach Anspruch 6, wobei die zumindest zwei Heizelemente (30) elektrische Widerstände sind.

8. Versorgungssystem (1) nach Anspruch 6, wobei die zumindest zwei Heizelemente (30) Kreise sind, die jeweils dazu ausgestaltet sind, ein heißes Fluid zirkulieren zu lassen.

9. Versorgungssystem (1) nach Anspruch 8, wobei die Kreise innerhalb der Wand des Reservoirs (20) angeordnet sind.

10. Versorgungssystem (1) nach einem der Ansprüche 6 bis 9, das eine elektronische Steuereinheit (60) beinhaltet, die dazu ausgestaltet ist, die Heizelemente (30) unabhängig voneinander zu aktivieren.

11. Versorgungssystem (1) nach Anspruch 10, das eine Vorrichtung (70) zur Niveaumessung beinhaltet, die es erlaubt, das Niveau einer Flüssigkeits-/Gas-Grenzfläche innerhalb des Reservoirs (20) zu bestimmen, wobei die Vorrichtung (70) zur Niveaumessung mit der elektronischen Steuereinheit (60) verbunden ist.

12. Versorgungssystem (1) nach Anspruch 10 oder 11, wobei die elektronische Steuereinheit (60) dazu ausgestaltet ist, in Abhängigkeit von dem Niveau der Flüssigkeits-/Gas-Grenzfläche innerhalb des Reservoirs (20), das von der Vorrichtung (70) zur Niveaumessung bestimmt wurde, das eine und/oder andere der Heizelemente (30) zu aktivieren.

13. Versorgungssystem (1) nach einem der vorhergehenden Ansprüche, wobei das Reservoir (20) eine Doppelwand beinhaltet, die eine äußere Wand und eine innere Wand mit einer höheren Leitfähigkeit als die äußere Wand aufweist.

## Claims

1. A supply system (1) for supplying a rocket engine with at least one propellant, the supply system (1) comprising at least one supply circuit (10) able to circulate the propellant, and at least one reservoir (20) in fluid communication with the supply circuit (10) via at least one communication pipe (50), so that a fluid contained in the reservoir (20) can flow from the latter up to the supply circuit (10), and vice versa, via said at least one communication pipe (50), the reservoir (20) being able to contain a volume of gas (G), the supply system (1) being **characterized in that** it comprises heating means able to vary the volume of gas in the reservoir (20), the heating means being configured to vaporize the propellant in the reservoir (20).

2. The supply system (1) according to claim 1, wherein the reservoir (20) and the heating means are at least partially separated from the supply circuit (10) by a thermally insulating area (40).

3. The supply system (1) according to claim 1 or 2, wherein the supply circuit (10) comprises a duct having an axial direction (A), and the reservoir (20) is disposed radially around the supply circuit (10), relative to the axial direction (A).

4. The supply system (1) according to claim 3, wherein the reservoir (20) has a cavity (22), the cavity (22) being radially offset relative to the axial direction (A), on one side of the supply circuit (10).

5. The supply system (1) according to claim 3, wherein the reservoir (20) is annular and is disposed radially around the supply circuit (10) relative to the axial direction (A).

6. The supply system (1) according to any one of the preceding claims, wherein the heating means comprise at least two heating elements (30) on one face of the reservoir (20), the at least two heating elements (30) being distributed along said face.

7. The supply system (1) according to claim 6, wherein the at least two heating elements (30) are electrical resistors.

8. The supply system (1) according to claim 6, wherein the at least two heating elements (30) are circuits each configured to circulate a hot fluid.

9. The supply system (1) according to claim 8, wherein the circuits are disposed inside the wall of the reservoir (20).

10. The supply system (1) according to any one of claims 6 to 9, including an electronic control unit (60) configured to activate the heating elements (30) independently of each other.

11. The supply system (1) according to claim 10, including a level measurement device (70) for determining the level of a liquid/gas interface within the reservoir (20), the level measurement device (70) being connected to the electronic control unit (60).

12. The supply system (1) according to claim 10 or 11, wherein the electronic control unit (60) is configured, as a function of the level of the liquid/gas interface within the reservoir (20) determined by the level measurement device (70), to activate either or both of the heating elements (30).

13. The supply system (1) according to any one of the preceding claims, wherein the reservoir (20) includes a double wall having an external wall and an internal wall of higher conductivity than the external wall.
